# EUROPEAN PATENT APPLICATION

(11) **EP 1 511 148 A2**
(43) Date of publication of application: **02.03.2005**
(21) Application number: 04254876.8
(22) Date of filing: 13.08.2004
(51) Int. Cl.: H02H 7/08

(54) **Surge voltage suppressor**

(30) Priority: 27.08.2003 JP 2003302477
(71) Applicant: FANUC LTD, Minamitsuru-gun, Yamanashi 401-0597 (JP)
(72) Inventor: Matsubara, Shunsuke, Minamitsuru-gun Yamanashi, 401-0302 (JP); Kimijima, Masami, Oshinomura Minamitsuru Yamanashi 4010511 (JP); Yamada, Yuuichi, Oshinomura Minamitsuru Yamanashi 4010511 (JP)
(74) Representative: Billington, Lawrence Emlyn

(57) **Abstract**

A surge voltage suppressor comprises semiconductor surge absorbing devices (3a to 3f) connected individually between power lines (4u, 4v, 4w) of the U, V and W phases which connect an inverter (1) and a motor (2), and/or between GROUND and the power lines (4u, 4v, 4w). The surge absorbing devices (3a to 3f) are adapted to be energized to clamp voltages between opposite terminals thereof when the voltages are higher than a given value.

## Description

### BACKGROUND OF THE INVENTION

### Field of the Invention

The present invention relates to a surge voltage suppressor for suppressing surge voltages that are generated in a motor when the motor is PWM-controlled by means of an inverter.

### Description of the Related Art

In drivingly controlling a motor by PWM (pulse width modulation) control using an inverter, DC voltage is converted into AC voltage by switching power transistors or other switching elements for PWM control, and the AC voltage is applied to windings for the individual phases of the motor.

In subjecting the motor to PWM control, the DC voltage is on-off controlled with the switching elements. If power lines for connection with the motor are long, their inductance increases so that surge voltages are generated between three-phase windings in the motor and between the ground and the windings. These surge voltages inevitably lower the effect of insulation between the windings and between the ground and the windings.

Conventionally, in order to prevent lowering of the insulation effect by the surge voltages, a filter that is composed of a reactor and a capacitor is provided between the inverter and the motor to remove the surge voltages.

In a voltage suppressor described in Japanese Patent Application Laid-open No. 8-23682, a three-phase diode bridge is connected to power lines for three-phase windings of a motor. A capacitor and a resistor are connected in parallel with the output of the diode bridge, and the capacitor is charged to a maximum output voltage of the inverter. If surge voltages are generated, the capacitor absorbs their energy through the diode bridge. The absorbed energy is consumed by the resistor that is connected in parallel with the capacitor or a reactor that is connected to positive and negative DC current bus terminals of the inverter.

According to the method in which the surge voltages are suppressed by the filter that is composed of the reactor and the capacitor, however, setting the filter requires a wide space and entails high cost.

According to the method described in Japanese Patent Application Laid-open No. 8-23682 in which the capacitor absorbs surge voltages through the three-phase diode bridge, on the other hand, current continually flows through the resistor and wastes energy.

### SUMMARY OF THE INVENTION

According to the present invention, there is provided a surge voltage suppressor for suppressing surge voltages generated in a motor driven by a PWM control inverter. In this suppressor, semiconductor surge absorbing devices adapted to be energized to clamp voltages when the voltages are higher than a given value are connected to power lines of the motor, whereby the surge voltages between the phases of the motor and between the ground and the phases are suppressed.

More specifically, the surge voltage suppressor is constructed so that the semiconductor surge absorbing devices are connected individually between the phases of the power lines of the motor and between the ground and the phases. Alternatively, the suppressor is designed so that the semiconductor surge absorbing devices are connected individually between the phases of the power lines of the motor or between the ground and the phases. Further, the suppressor is constructed so that on terminal of each of the semiconductor surge absorbing devices is connected to one of the power lines for the individual phases of the motor, while the other terminal is connected to one terminal of a semiconductor surge absorbing device of which the other terminal is connected to the ground.

Furthermore, the surge voltage suppressor is constructed so that the individual phases of the power lines of the motor are connected to a three-phase full-wave rectifier, and that the semiconductor surge absorbing devices are connected individually between a positive terminal and a negative terminal of the full-wave rectifier, between the positive terminal and the ground, and between the negative terminal and the ground. Alternatively, the surge voltage suppressor is designed so that the individual phases of the power lines of the motor are connected to a three-phase full-wave rectifier, and that the semiconductor surge absorbing devices are connected between a positive terminal and a negative terminal of the full-wave rectifier, or connected individually between the positive terminal and the ground and between the negative terminal and the ground.

The semiconductor surge absorbing devices are mounted on a printed board housed in a hermetically sealed case. Thus, cutting oil or chips are prevented from adhering to the devices or the printed board. Furthermore, the case is used doubling as a terminal box attached to the motor.

According to the present invention, there may be provided a compact surge voltage suppressor that can absorb only surge energy without wasting energy. According to the invention, surge energy can be securely absorbed with use of a simple construction that requires only a narrow setting space, and the effect of insulation between the phases of the motor and between the ground and the phases can be prevented from lowering.

### BRIEF DESCRIPTION OF THE DRAWINGS

The above and other objects and features of the invention will be more apparent from the ensuing description taken in connection with the accompanying drawings, in which:
FIG. 1 is a block diagram showing principal parts according to a first embodiment of the invention;
FIG. 2 is a block diagram showing principal parts according to a second embodiment of the invention;
FIG. 3 is a block diagram showing principal parts according to a third embodiment of the invention;
FIG. 4 is a block diagram showing principal parts according to a fourth embodiment of the invention;
FIG. 5 is a block diagram showing principal parts according to a fifth embodiment of the invention;
FIG. 6 is a block diagram showing principal parts according to a sixth embodiment of the invention;
FIG. 7 is a block diagram showing principal parts according to a seventh embodiment of the invention;
FIGS. 8A and 8B illustrate an example of the way of mounting semiconductor surge absorbing devices according to each of the embodiments, in which FIG. 8A is a plan view showing a case with its top plate off, and FIG. 8B is a side view showing the case with its side plate off; and
FIG. 9 is a view illustrating another example of arrangement of the semiconductor surge absorbing devices according to each of the embodiments.

### DESCRIPTION OF THE PREFERRED EMBODIMENTS

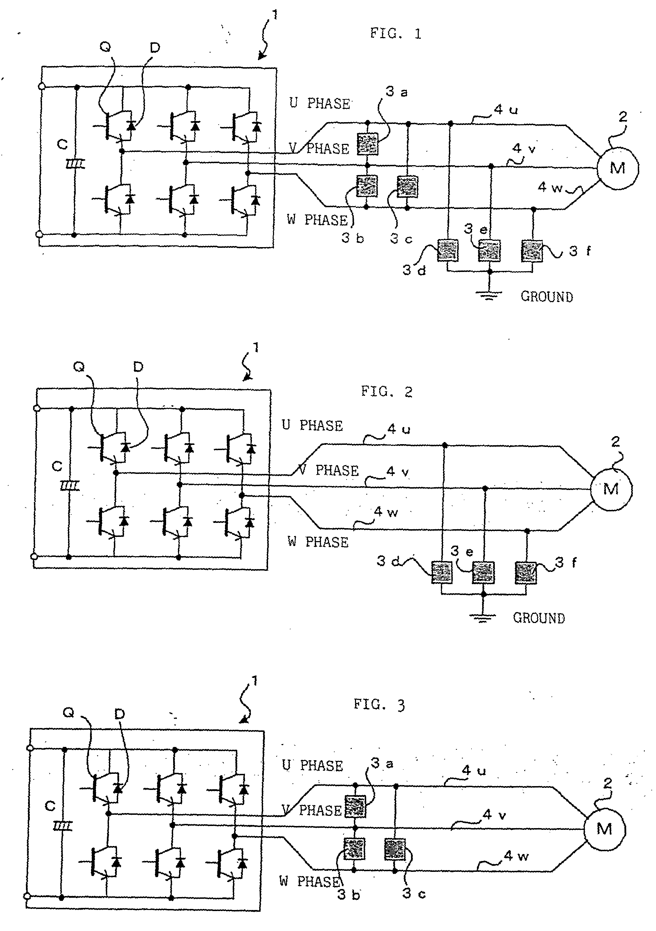

FIG. 1 is a block diagram showing principal parts according to a first embodiment of the invention.

Numeral 1 denotes a conventional inverter that converts DC voltage into AC voltage by PWM control. Parallel-connected sets of switching elements Q, such as power transistors, and diodes D are connected in series between positive and negative terminals of a DC power supply for the U, V and W phases. Outputs from the inverter 1 for the individual phases are fetched from series-connection nodes of the parallel-connected sets of switching elements Q and diodes D, and delivered to U-, V- and W-phase windings of a motor 2 by means of power lines 4u, 4v and 4w, individually. Symbol C in the inverter 1 designates a capacitor of the DC power supply.

Semiconductor surge absorbing devises 3 (3a to 3f) are connected between the phases and between the ground and the phases. They have characteristics such that current flows through them to clamp voltage when the voltage reaches a given or higher value. More specifically, the semiconductor surge absorbing devises 3a, 3b and 3c are connected between the U- and V-phase power lines 4u and 4v, between the V- and W-phase power lines 4v and 4w, and between the U- and W-phase power lines 4u and 4w, respectively. The semiconductor surge absorbing devises 3d, 3e and 3f are connected between the ground and the U-, V- and W-phase power lines 4u, 4v and 4w, respectively.

The semiconductor surge absorbing devises 3 are arranged so that a plurality of semiconductor surge absorbing device elements are connected in series to obtain a desired clamping voltage. If the withstand voltage of the motor is 1,000 V, for example, the semiconductor surge absorbing device elements can be connected in series to adjust the clamping voltage to less than 1,000 V, e.g., to 700 V.

The switching elements Q are switched on to actuate the motor 2 in response to a PWM signal. If voltage across each semiconductor surge absorbing device 3 is increased to a preset clamping voltage or higher due to surge voltages that are generated by this switching operation, the device 3 is energized to cause current flow, and the voltage of the power line 4 is clamped to a preset desired value. Thereupon, the surge voltages are absorbed.

If voltage between the U- and V-phase power lines 4u and 4v is increased to a level higher than a clamping voltage (e.g., 700 V) that is set in the semiconductor surge absorbing device 3a by the surge voltages, for example, the device 3a is energized to cause current flow, so that the voltage between the power lines 4u and 4v never exceeds the clamping voltage. Thus, deterioration in insulation between the U- and V-phase power lines 4u and 4v can be prevented.

Likewise, if voltages between the V- and W-phase power lines and between the U- and W-phase power lines exceed the respective clamping voltages of the semiconductor surge absorbing devices 3b and 3c due to the surge voltages, the devices 3b and 3c are energized to cause current flow, thereby absorbing the surge voltages. If voltages between the ground and the individual phases exceed clamping voltages that are set in the semiconductor surge absorbing devices 3d, 3e and 3f, moreover, the devices 3d, 3e and 3f are energized to cause current flow, thereby absorbing the surge voltages. Thus, deterioration in insulation between the phases and between the ground and the phases by the surge voltages can be prevented.

Furthermore, the semiconductor surge absorbing devices 3 (3a to 3f) consume only surge energy that is produced by the voltages between the terminals of respective devices 3 when the switching elements Q are switched on, so that energy can be consumed efficiently without waste.

FIG. 2 is a block diagram showing principal parts according to a second embodiment of the invention.

According to this second embodiment, the semiconductor surge absorbing devices 3a, 3b and 3c between the power lines 4u, 4v and 4w for the individual phases according to the first embodiment shown in FIG. 1 are omitted, and semiconductor surge absorbing devices 3d, 3e and 3f are arranged only between the ground and the power lines 4u, 4v and 4w. If voltages between the ground and the power lines 4u, 4v and 4w exceed the clamping voltages of the semiconductor surge absorbing devices 3d, 3e and 3f, the devices 3d, 3e and 3f are energized and absorb the surge voltages.

FIG. 3 is a block diagram showing principal parts according to a third embodiment of the invention.

According to this third embodiment, the semiconductor surge absorbing devices 3d, 3e and 3f between the ground and the power lines 4u, 4v and 4w for the individual phases according to the first embodiment shown in FIG. 1 are omitted, and semiconductor surge absorbing devices 3a, 3b and 3c are arranged only between the power lines 4u, 4v and 4w. If voltages between the phases are increased above the' clamping voltages, the semiconductor surge absorbing devices 3a, 3b and 3c are energized and absorb the surge voltages.

The first to third embodiments may be used alternatively, depending on the specifications and characteristics of the motor and the like.

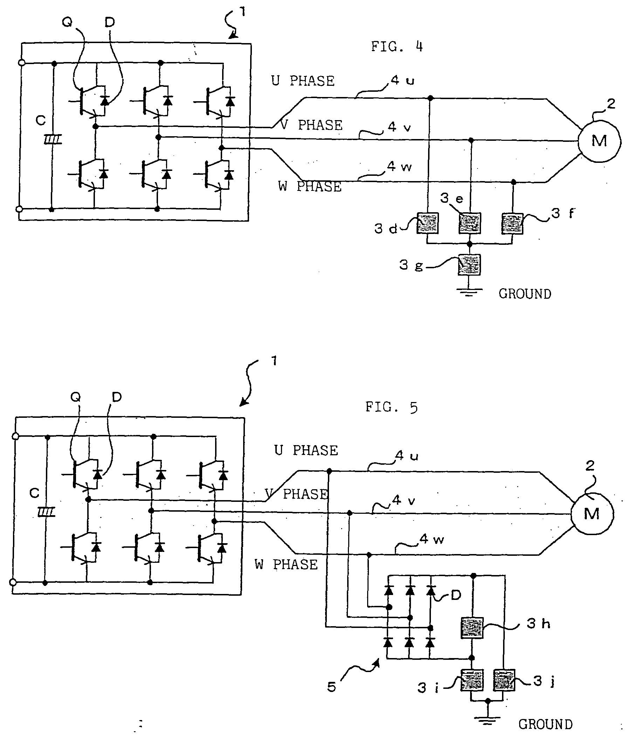

FIG. 4 is a block diagram showing principal parts according to a fourth embodiment of the invention.

According to this fourth embodiment, the semiconductor surge absorbing devices 3 are reduced in number to achieve the same functions of the first embodiment shown in FIG. 1. In the fourth embodiment, one terminal of each of the semiconductor surge absorbing devices 3d, 3e and 3f is connected to one of the power lines 4u, 4v and 4w for the individual phases of the motor that connect outputs for the phases of the inverter 1 and windings for the phases. On the other hand, the other terminal of each of the devices 3d, 3e and 3f is connected to one terminal of a semiconductor surge absorbing device 3g. The other terminal of the device 3g is connected to the ground.

In consequence, the U-phase power line 4u is connected to the ground through a series circuit of two semiconductor surge absorbing devices 3d and 3g. Likewise, the V-phase power line 4v is connected to the ground through a series circuit of two devices 3e and 3g, and the W-phase power line 4w to the ground through a series circuit of two devices 3f and 3g.

Further, the U- and V-phase power lines 4u and 4v are connected to each other through the semiconductor surge absorbing devices 3d and 3e. Likewise, the V- and W-phase power lines 4v and 4w are connected to each other through the devices 3e and 3f, and the U- and W-phase power lines 4u and 4w through the devices 3d and 3f.

If the clamping voltages between the phases and between the ground and the phases are 700 V, all the elements of the semiconductor surge absorbing devices 3a to 3f shown in FIG. 1 must be connected so that their respective clamping voltages are 700 V.

According to the fourth embodiment shown in FIG. 4, on the other hand, the same functions of the first embodiment can be achieved by adjusting the clamping voltages of the semiconductor surge absorbing devices 3d to 3g to 350 V. Thus, the U and V phases are connected through the devices 3d and 3e, so that the clamping voltages are adjusted to 700 V. Likewise, the V and W phases and the U and W phases are connected through the devices 3e and 3f and the devices 3d and 3f, respectively, so that the voltages between these phases are clamped to 700 V.

Further, the power lines 4u, 4v and 4w for the individual phases are connected to the ground through the semiconductor surge absorbing devices 3d, 3e and 3f, respectively, and the semiconductor surge absorbing device 3g. Therefore, the voltages between the ground and the phases are also clamped to 700 V, and the surge voltages are absorbed through the devices 3d to 3g.

While the semiconductor surge absorbing devices 3 used in the first embodiment shown in FIG. 1 are six in number, those used in the fourth embodiment shown in FIG. 4 are four. Further, the respective clamping voltages of the devices 3d to 3g of the fourth embodiment are only half those of the devices 3 of the first embodiment shown in FIG. 1. Therefore, the semiconductor surge absorbing device elements that constitute the semiconductor surge absorbing devices 3 can be reduced in number. Thus, the device elements are so few, as a whole, that the resulting structure can be low-priced.

FIG. 5 is a block diagram showing principal parts according to a fifth embodiment of the invention.

According to this fifth embodiment, a three-phase full-wave rectifier 5 is used to detect voltages and absorb the surge voltages.

Input terminals of the three-phase full-wave rectifier 5 are connected individually to the U-, V-and W-phase power lines, while its output terminals are connected to each other by means of a semiconductor surge absorbing device 3h. The positive output terminal of the rectifier 5 is connected to the ground through a semiconductor surge absorbing device 3j. The negative output terminal of the rectifier 5 is connected to the ground through a semiconductor surge absorbing device 3i. Symbol D in the three-phase full-wave rectifier 5 denotes the diodes that constitute the rectifier 5.

In a normal state without surge voltages, voltages rectified by the three-phase full-wave rectifier 5 never exceed the clamping voltages of the semiconductor surge absorbing devices 3h, 3i and 3j, so that those devices 3h, 3i and 3j are not energized.

If a surge voltage causes a voltage between phases to exceed the clamping voltage of the semiconductor surge absorbing device 3h, the device 3h is energized and absorbs the surge voltages. If a positive surge voltage is generated against the ground and exceeds the clamping voltage of the semiconductor surge absorbing device 3j, the device 3j is energized and absorbs the surge voltage. Likewise, if a negative surge voltage is generated against the ground and exceeds the clamping voltage of the semiconductor surge absorbing device 3i, the device 3i is energized and absorbs the surge voltage.

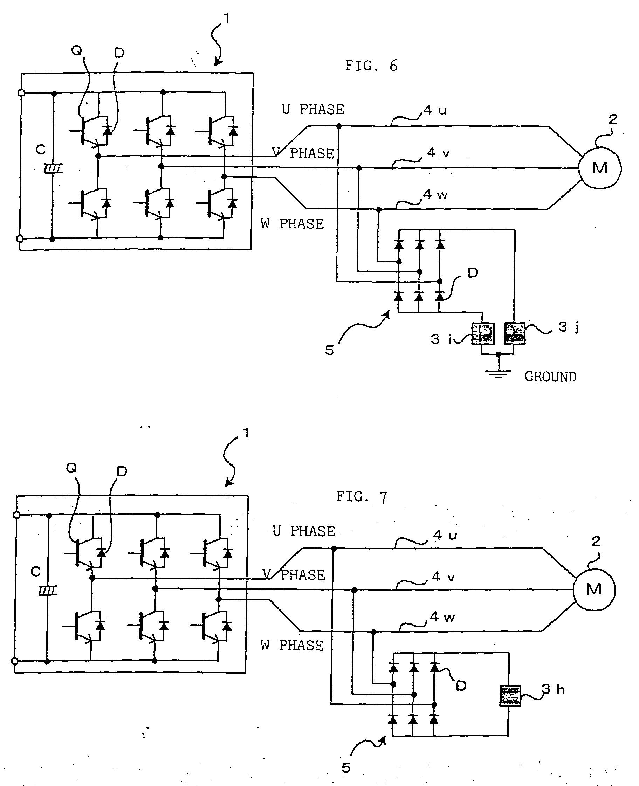

FIG. 6 shows a sixth embodiment of the invention. According to this sixth embodiment, the semiconductor surge absorbing device 3h that is connected between the output terminals of the three-phase full-wave rectifier 5 of the fifth embodiment shown in FIG. 5 and clamps the phase voltage is omitted. The sixth embodiment shares other configurations and functions with the fifth embodiment.

FIG. 7 shows a seventh embodiment of the invention. According to this seventh embodiment, the semiconductor surge absorbing devices 3i and 3j between the ground and the output terminals of the three-phase full-wave rectifier 5 of the fifth embodiment shown in FIG. 5 is omitted. The seventh embodiment shares a function with the semiconductor surge absorbing device 3h between the output terminals of the three-phase full-wave rectifier 5 described in connection with the fifth embodiment.

The fifth to seventh embodiments may be also used alternatively, depending on the specifications or the like of the motor.

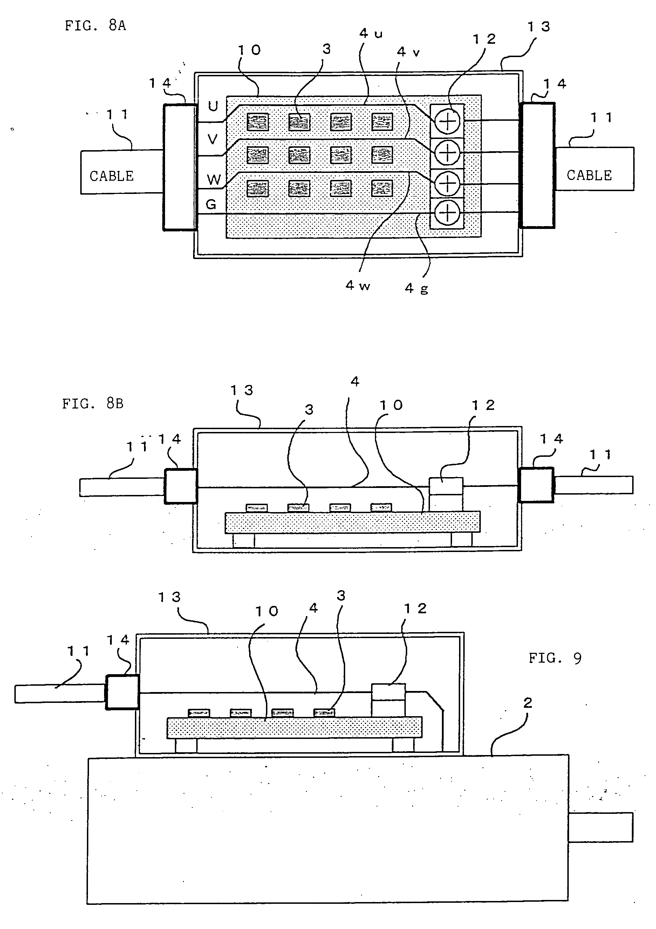

FIGS. 8A and 8B are views illustrating an example of the way the semiconductor surge absorbing devices 3 according to the above-described embodiments are mounted. FIG. 8A is a plan view showing a case 13 with its top plate off. FIG. 8B is a side view showing the case 13 with its side plate off.

The semiconductor surge absorbing devices are mounted on a printed board 10, which is housed in the hermetically sealed case 13. A cable 11 for the power lines are attached to the case 13 by means of a connector 14. The U-, V- and W-phase power lines 4u, 4v and 4w and a ground wire 4g are led out of the connector 14, and are fixed to the printed board 10 by means of screws 12 on the board 10 to be connected electrically to the devices 3.

In this embodiment, the case 13 is formed having a hermetically sealed structure for the following reason. The inverter and the motor, which are used to drive a machine tool or the like, are located in a tough environment. Therefore, cutting oil, chips that are produced by machining operation of the machine tool, and the like must be prevented from adhering to the printed board 10, semiconductor surge absorbing devices 3, etc. If the working environment is favorable, however, the case need not be hermetically sealed.

FIG. 9 shows another example in which the case 13 that houses the printed board 10 on which the semiconductor surge absorbing devices 3 are mounted is used doubling as a terminal box that is attached to the motor 2. The motor 2 is provided with the terminal box that houses terminals for connecting the windings of the motor and the power lines 4u, 4v and 4w. This terminal box serves also as the case 13 that houses the printed board 10 on which the devices 3 are mounted.

## Claims

1. A surge voltage suppressor for suppressing surge voltages generated in a motor driven by a PWM control inverter, wherein
semiconductor surge absorbing devices adapted to be energized to clamp voltages when the voltages are higher than a given value are connected to power lines of the motor, whereby the surge voltages between the phases of the motor and between the ground and the phases are suppressed.

2. A surge voltage suppressor for suppressing surge voltages generated in a motor driven by a PWM control inverter, wherein
semiconductor surge absorbing devices adapted to be energized to clamp voltages when the voltages are higher than a given value are connected individually between the phases of power lines of the motor and between the ground and the phases.

3. A surge voltage suppressor for suppressing surge voltages generated in a motor driven by a PWM control inverter, wherein
semiconductor surge absorbing devices adapted to be energized to clamp voltages when the voltages are higher than a given value are connected between the phases of power lines of the motor or between the ground and the phases.

4. A surge voltage suppressor for suppressing surge voltages generated in a motor driven by a PWM control inverter, wherein
one terminal of each of semiconductor surge absorbing devices adapted to be energized to clamp voltage when the voltage is higher than a given value is connected to one of power lines for the individual phases of the motor, while the other terminal is connected to one terminal of a semiconductor surge absorbing device of which the other terminal is connected to the ground.

5. A surge voltage suppressor for suppressing surge voltages generated in a motor driven by a PWM control inverter, wherein
the individual phases of power lines of the motor are connected to a three-phase full-wave rectifier; and
semiconductor surge absorbing devices adapted to be energized to clamp voltages when the voltages are higher than a given value are connected individually between a positive terminal and a negative terminal of the full-wave rectifier, between the positive terminal and the ground, and between the negative terminal and the ground.

6. A surge voltage suppressor for suppressing surge voltages generated in a motor driven by a PWM control inverter, wherein
the individual phases of power lines of the motor are connected to a three-phase full-wave rectifier; and
semiconductor surge absorbing devices adapted to be energized to clamp voltages when the voltages are higher than a given value are connected between a positive terminal and a negative terminal of the full-wave rectifier, or connected individually between the positive terminal and the ground and between the negative terminal and the ground.

7. The surge voltage suppressor according to any one of claims 1 to 6, wherein the semiconductor surge absorbing devices are mounted on a printed board housed in a hermetically sealed case.

8. The surge voltage suppressor according to claim 7, wherein said hermetically sealed case serves also as a terminal box attached to the motor.
